# EUROPEAN PATENT SPECIFICATION

(11) **EP 1 397 395 B1**
(45) Date of publication and mention of the grant of the patent: **29.07.2015**
(21) Application number: 02760186.3
(22) Date of filing: 18.06.2002
(51) Int. Cl.: C08F 4/654, C08F 10/00

(54) **OLEFIN POLYMERISATION CATALYST AND METHODS FOR PREPARING THE SAME**
KATALYSATOR FÜR DIE OLEFINPOLYMERISATION UND VERFAHREN ZU SEINER HERSTELLUNG
CATALYSEUR DE POLYMÉRISATION D'OLÉFINES ET PROCÉDÉS DE FABRICATION CORRESPONDANTS

(30) Priority: 20.06.2001 EP 01115000
(43) Date of publication of application: 17.03.2004
(73) Proprietor: Borealis Technology Oy, 06101 Porvoo (FI)
(72) Inventor: DENIFL, Peter, A-6156 Gries am Brenner (AT); LEINONEN, Timo, FIN-06750 Tolkkinen (FI); VAN PRAET, Erik c/o Borealis Polymers Oy, FIN-06101 Porvoo (FI); GAROFF, Thomas, FIN-00840 Helsinki (FI); PESONEN, Kari, FIN-07230 Monninkylä (FI)
(74) Representative: Campbell, Neil Boyd
(86) International application number: PCT/EP2002/006716
(87) International publication number: WO 2003/000755

(56) References cited:
- EP-A- 0 083 074
- EP-A- 0 281 524
- EP-A- 0 522 650
- EP-A- 0 536 840
- EP-A- 0 553 806
- US-A- 4 298 718
- US-A- 4 399 055
- US-A- 4 481 342

## Description

The present invention relates to an olefin polymerisation catalyst comprising a catalyst component in the form of particles having a predetermined size range and a low surface area, said catalyst being suitable for olefin polymerisation, to the catalysts as such and to their use in polymerising olefins, and to processes for preparing and using the same.

### Background art

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.

Various methods for preparing ZN catalysts are known in the state of art. In one conventional method, a supported ZN catalyst system is prepared by impregnating the catalyst components on a particulate support material. In WO-A-01 55 230, the catalyst component(s) are supported on a porous, inorganic or organic particulate carrier material, such as silica.

In a further well known method the carrier material is based on one of the catalyst components, e.g. on a magnesium compound, such as MgCl₂. This type of carrier material can also be formed in various ways. EP-A-713 886 of Japan Olefins describes the formation of Mg-melt by melting MgCl₂ with an alcohol which is then emulsified and finally the resultant mixture is quenched to cause the solidification of the droplets.

Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst.

Accordingly, in case of above external carriers, the morphology of the carrier is one of the defining factors for the morphology of the final catalyst.

One disadvantage encountered with the supported catalyst systems is that a possible surface treatment (impregnation step) of the support with one or more catalytically active compounds may lead to non-uniform distribution of the active component(s) and in turn to an inhomogeneous polymer material.

WO-A-00 08073 and WO-A-00 08074 describe further methods for producing a solid ZN-catalyst, wherein a solution of a Mg-based compound and one or more further catalyst compounds are formed and the reaction product thereof is precipitated out of the solution by heating the system. Furthermore, EP-A-926 165 discloses another precipitating method, wherein a mixture of MgCl₂ and Mg-alkoxide is precipitated together with a Ti-compound to give a ZN catalyst.

EP-A-83 074 and EP-A-83 073 of Montedison disclose methods for producing a ZN catalyst or a precursor thereof, wherein an emulsion or dispersion of Mg and/or Ti compound is formed in an inert liquid medium or inert gas phase and said system is reacted with an Al-alkyl compound to precipitate a solid catalyst. According to examples said emulsion is then added to a larger volume of Al-compound in hexane and prepolymerised to cause the precipitation.

In EP-A-258 089 of Montedison, an emulsion of a catalyst component, or a precursor thereof, comprising a Mg and/or Ti compound is formed in perfluoropolyether and the dispersed phase is reacted with a reducing and/or halogenating agent to precipitate said catalyst components or a precursor thereof. According to the examples said emulsion is then added to a larger volume of a solution of a halogenating agent and TiCl₄-treatment is further continued in the formed suspension to effect the surface treatment of the particles. It has been indicated in said EP patent that one of the required properties of a good catalyst is a high surface area.

In general, a drawback of such precipitation methods is the difficulty to control the precipitation step and thus the morphology of the precipitating catalyst particles.

Furthermore, the precipitation of the catalyst component(s) may often proceed via a "tar-like" intermediate stage. Said undesired sticky precipitate agglomerates easily and sticks to the walls of the reactor. The morphology of the catalyst would then of course be lost.

Accordingly, although much development work has been done in the field of Ziegler-Natta catalysts, there remains a need for alternative or improved methods of producing ZN catalysts with desirable properties.

### Summary of the invention

The object of the present invention is to provide solid particles of a Ziegler-Natta catalyst in a controlled manner, whereby particles with a preferable morphology, such as a spherical shape, an uniform particle size (a narrow particle size distribution), a reduced surface area at high catalytic activity and/or other advantageous surface properties, can be obtained.

A further object of the present invention is to provide an olefin polymerisation catalyst obtainable by the method of the invention.

### BRIEF DESCRIPTION OF THE DRAWINGS

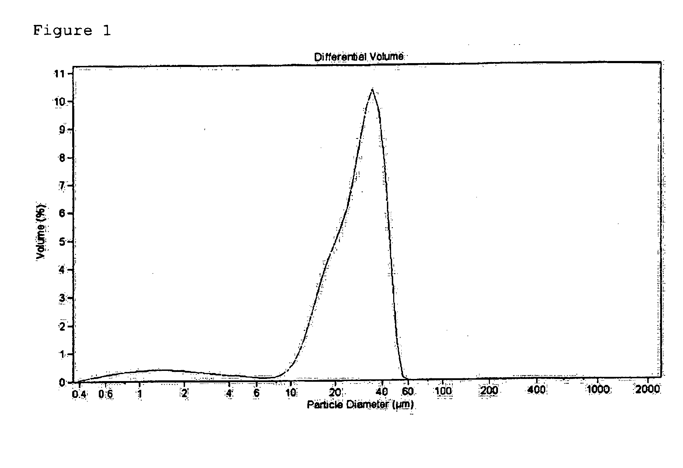

- Fig. 1: shows the particle size distribution of a catalyst prepared according to a first embodiment of the invention.

### DESCRIPTION OF THE INVENTION

The invention is based on the finding that catalysts can be obtained having spherical particles with a specific surface area <20 m²/g. The Ziegler-Natta catalyst for olefin polymerisation comprises a catalyst component in the form of solid particles having a predetermined particles size distribution, said particles being formed by contacting (a) at least one compound of group 1 to 3 of the Periodic Table (IUPAC) with (b) at least one compound selected from a transition metal compound of group 4 to 10 of the Periodic Table (IUPAC), or a compound of an actinide or lanthanide, to form a reaction product, wherein the catalytically active sites are distributed throughout the particles and wherein said catalyst particles have a spherical shape and a surface area of less than 20 m²/g.

According to the findings of the inventors, said distribution of active sites is being effected during the solidification step to form said particles, thus leading to a catalyst having a catalytic activity of more than 10 kg polymer per g catalyst per hour.

In more detail , said Ziegler-Natta catalyst for olefin polymerisation can be obtained in the form of solidified particles, said particles having a spherical shape, a predetermined particles size distribution and a surface area of less than 20 m²/g, wherein the catalytically active sites are distributed throughout the particles, said particles being obtainable by a process comprising the steps of
a) contacting at least one compound of group 1 to 3 of the Periodic Table (IUPAC) with at least one compound selected from
   i) transition metal compound of group 4 to 10 of the Periodic Table (IUPAC), or
   ii) a compound of an actinide or lanthanide to form a reaction product;
b) preparing an emulsion from the reaction product of a) and a liquid medium in which emulsion the product of a) forms the droplets of the dispersed phase; and
c) solidifying the droplets of the dispersed phase to form the solidified particles, and optionally
d) recovering said solidified catalyst particles.

The porosity, i.e. a large surface area, of a catalyst has been generally considered to be a requirement for achieving a catalytically active catalyst. Moreover, a porous structure of a catalyst has also been thought to be necessary for producing certain type of polymers, such as heterophasic PP copolymer.

It has now been found that the "nonporous" catalyst of the invention has the same or even higher catalytic activity than the porous systems of the prior art. Moreover, the present catalyst is particularly suitable for e.g. heterophasic PP copolymerisation. E.g. for propylene (co)polymerisations a catalytic activity of more than 15 kg, preferably more than 20 kg and most preferably more than 25 kg polymer per gram catalyst per hour, can be obtained. In case of ethylene (co)polymerisations activity of more than 3 kg, preferably more than 5 kg, or even more than 10 kg polymer per gram catalyst per hour can be obtained. The polymerisation conditions in each case are e.g. as described below in the test polymerisations of Examples 1 and 2.

Moreover, in the particles of the inventive catalyst the catalytically active sites are distributed throughout the particles. The catalyst is in a form of solidified particles wherein said distribution of active sites being effected (in situ) during the solidification step of the particles. Thus the solidified particles are not subjected to any post treatment with active sites forming compound(s), e.g. a titanium compound, after the solidification of the particles. The inventors have also found that in the catalyst particles of the invention the subsequent washing steps do not effect significantly on the distribution of the active sites.

Accordingly, it has now been managed by the invention to combine the advantages of the catalyst system known in the state of art, i.e. desired morphology of the final particles, which contributes to the morphology of the final polymer having a high bulk density (preferably >400 kg/m³), a narrow particle size distribution without fines, together with a high catalytic activity, but without the use of an external carrier.

Surprisingly, the inventors of the present invention have found that by preparing an emulsion and solidifying the droplets of the dispersed phase in which the active catalyst components are present, preferably by subjecting the emulsion to a heat treatment, particles of the catalyst component can be obtained which show superior properties.

Surprisingly, the present conversion method enables to create the morphology of the final catalyst *in situ* during the solidification step of the catalyst component(s).

The invention thus provides a controlled method to obtain active catalyst particles with highly preferable morphology, e.g. with a predetermined spherical shape, uniform particle size distribution and desirable surface properties , such as low surface area.

The invention is therefore also directed to process for preparing a Ziegler-Natta catalyst for olefin polymerisation according to claim 1, said process comprising the steps of
a) contacting at least one compound of group 1 to 3 of the Periodic Table (IUPAC) with at least one compound selected from
   i. a transition metal compound of group 4 to 10 of the Periodic Table (IUPAC), or
   ii. a compound of an actinide or lanthanide to form a reaction product;
b) preparing an emulsion from the reaction product of a) and an liquid medium in which emulsion the product of a) forms the droplets of the dispersed phase; and
c) solidifying the droplets of the dispersed phase, and optionally
d) recovering the solidified catalyst particles.

In the optional recovery step, the solid catalyst component particles may be isolated, optionally washed and dried in a manner known in the art to obtain said catalyst as particulate solids.

In one embodiment of the invention said catalyst component may be formed, in addition to above said compounds, also from further compounds, which can be added to the solution of the catalyst component forming compounds before or after the dispersing step. Such further compounds, may be those conventionally used in the art, such as an aluminium compound and/or an internal donor compound, preferably an aluminium compound, such as an alkyl aluminium halide.

Furthermore, in addition to the catalyst component as defined above, the catalyst of the invention may comprise further catalyst component(s), such as a cocatalyst and/or an external donor compound known in the art. The further catalyst component(s) can be incorporated to the catalyst during the preparation method of the invention, or added separately with the catalyst of the invention at the actual polymerisation step.

Accordingly, the invention enables the inclusion of all the desired compounds to the dispersed phase and thus the solidification of the final composition of the catalyst component(s). As a consequence, the obtained particles need no subsequent surface treatment(s) normally required for supported catalyst systems of the prior art. Thus, the preferable morphology achievable with the present two-phase solidification method can be maintained.

If desired, the catalyst comprising the catalyst component(s) of the invention can further be surface treated with further compound(s), e.g. powder flowability improving agent, in a manner known in the art.

It is the important finding according to the invention that the droplets of the dispersed phase of the emulsion can be solidified directly starting from the emulsion form so that the particle size of the so obtainable catalyst component and the particle size distribution can be controlled easily. The formed particles may have an average size range of 1 to 500 µm, e.g. 5 to 500 µm, advantageously 5 to 200 µm or 10 to 150 µm. Even an average size range of 5 to 50 µm is possible.

According to the invention, two methods for preparing the invention are particularly preferred. In either embodiment, similar or identical metal and transition metal compounds as well as donor compounds as exemplified below can be used, depending on the specific characteristics of the catalyst forming phase and the desired properties of the catalyst to be formed. If the catalyst forming phase is formed as said dispersed phase when the reaction partners are brought into contact, the addition of a liquid medium or solvent which is immiscible with the reaction partners or the solution thereof might not be necessary.

In the first embodiment, said compound of group 1 to 3 of the Periodic Table (IUPAC) is preferably used in a prereacted form which is obtainable by reacting it with an electron donor or a precursor thereof, and adding said prereacted compound of group 1 to 3 in a liquid medium to said compound selected from a transition metal compound of group 4 to 10 of the Periodic Table (IUPAC), or a compound of an actinide or lanthanide to form a reaction product. By adding said solution of said reaction product to at least one compound of a transition metal, an emulsion, the dispersed phase of which contains more than 50 mol% of the Group 1 to 3 metal in said complex, can be prepared by agitating the reaction mixture, optionally in the presence of an emulsion stabilizer, in order to maintain the droplets of said dispersed phase within the average size range 5 to 200µm. In this embodiment, the droplets are formed by the reaction of the components in the solution and then solidified, particularly by heating the emulsion.

In the second embodiment, said at least a compound of group 1 to 3 of the Periodic Table (IUPAC), optionally prereacted with an internal donor compound, is reacted with a compound selected from at least one transition metal compound of group 4 to 10 of the Periodic Table (IUPAC), or a compound of an actinide or lanthanide to form a reaction product, which is then mixed with an inert organic solvent, said solvent being immiscible with the reaction product and inert in relation to the compounds and said solvent forming the continuous phase of the emulsion. Preferably, said immiscible solvent is selected from a fluorinated hydrocarbon or a functionalised derivative thereof, or mixtures thereof. Particularly, the solvent is a perfluorinated hydrocarbon. Either method is prepared in more detail below.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and most preferably 12 to 20 carbon atoms in the ester side chain. Particular preferred are unbranched C₁₂ to C₂₀ acrylates such as poly(hexadecyl)-methacrylate and poly(octadecyl)-methacrylate.

Additional agents and/or compounds can be added to the system in any stage of the dispersing and/or solidification step, if needed.

The droplet size and size distribution of the formed discontinuous phase can be selected or controlled in a manner known in the art, i.a. by the choice of the device for emulsion formation and by the energy put into emulsification. According to the common knowledge in the emulsion field, vigorous mixing is usually required in order to get desired effect.

In the preparation process of the invention the solution may already contain all the compounds (to be added) before the dispersing step thereof. Alternatively, e.g. depending on the reactivity of the compounds, the dispersed phase can be formed first from one or more of the compounds and, thereafter, the other compound(s) can be added separately to said dispersed phase. Said other compounds can be added in a form of a solution or already in a form of an emulsion. Portion-wise additions of the dispersed phase are also possible.

In one embodiment, the inventive process further comprises adding a turbulence minimizing agent(TMA) or mixtures thereof to the emulsion system in order to minimize or to avoid turbulences in the mixture.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from α-olefin polymers having a high molecular weight of MW about 1 - 40 x 10⁶, or mixtures thereof. Especially preferred are polymers of α-olefin monomers with 6 to 20 carbon atoms, most preferable is polydecene.

In more detail, the turbulence minimizing agent is preferably selected from the group consisting of inert poly(C₆-C₂₀)-olefines or mixtures thereof, and more preferably from polyoctene, polynonene, polydecene, polyundecene or polydodecene or mixtures thereof, having the molecular weight and general backbone structure as defined before.

Usually, said turbulence minimizing agent can be added in any process step before particle formation starts, i.e. commonly before or at the latest before solidification of the emulsion, and is added to the emulsion in an amount of 1 to 1.000 ppm, preferably 5 to 100 ppm and more preferable 5 to 50 ppm, based on the total weight of the reaction mixture.

One of the further advantages of the solidification of the dispersed droplets according to the invention is that the undesirable tar formation can be avoided.

### Catalyst compounds and preparation of the reaction product

The idea of the present invention lies in the emulsion/solidification method which provides the advantageous morphology of the final catalyst. Therefore this invention is not limited to a specific ZN catalyst composition, but covers the preparation of any ZN catalyst, the starting material of which can be provided in liquid state during the preparation step. This means that e.g. ZN catalysts for (co)polymerising ethene (PE catalyst) or propene (PP catalyst) can be prepared.

The various possibilities of the compounds and combinations are within the skills of a person in the field. Accordingly, the reaction product of catalyst forming compounds can be formed by contacting:
1) at least one compound of group 1 to 3, preferably group 2, of the Periodic Table (IUPAC), such as a Mg compound, having a general formula selected from:

   Mg(OR₁)₂₋ₙXₙ (I),

   wherein each R₁ is independently a C₁₋₂₀-hydrocarbyl group, e. g. C₂₋₁₅ hydrocarbyl group, preferably C₃₋₁₀ group, such as C₄₋₈ group, e.g. linear or branched alkyl, aryl, aralkyl, or alkaryl, which may optionally be substituted with halogen; each X is independently a halogen, preferably chlorine; n is 0, 1 or 2;

   Mg(OR₁)₂₋ₙ(R₂)ₙ (II),

   wherein R₁ and n are as defined above in formula (I) and each R₂ is independently a hydrocarbyl, e.g. linear or branched C₁₋₂₀alkyl;

   MgX₂.mTi (OR₁)₄ (III),

   wherein X and R₁ are as described above in formula (I); 0.1≤ m ≤ 3; and/or
   complexes of MgX₂ with electron-donor compounds;
2) with at least one transition metal compound of Group 4 to 10, or a compound of lanthanide or actinide, preferably a transition compound of group 4 to 6, more preferably of group 4, of the Periodic Table (IUPAC), such as a Ti compound, where particularly, a tetravalent Ti compound can be used examples of which are:

   TiX₄ (IV),

   wherein X is defined as above in formula (I), such as Cl;

   Ti(OR₁)₄₋ₚXₚ (V),

   wherein X and R₁ are as defined above in formula (I) and p is 0, 1, 2 or 3;
   and optionally with further compound(s), e.g.
3) optionally with at least one compound of group 13 of the Periodic Table. (IUPAC), preferably an aluminium compound, such as

   Al(R₁)ₓX₃₋ₓ (VI),

   wherein R₁ and X are as defined above in formula (I) and is 0 ≤ x <3, examples of which are e.g. dimethyl aluminium chloride, diethyl aluminium chloride, diisobutyl aluminium chloride, ethyl aluminium dichloride (EADC) and methyl aluminium dichloride; and/or
4) optionally with at least one (internal) electron donor, e.g. those known in the art for (co)polymerising propylene and higher olefins including organic compounds containing oxygen, nitrogen, sulphur and/or phosphorous, such as organic acids, organic acid anhydrides, organic acid esters, alcohols, ethers, aldehydes, ketones, amines, amine oxides, amides, thiols, various phosphorous acid esters and amides, added as such or formed in situ (see also WO 00 08074 and WO 00 08073)

As mentioned above the solid catalyst particles may contain further catalyst component(s), such as cocatalysts and/or external donor(s), depending on the used polymerisation process, in a manner known in the art. As the cocatalyst, e.g. conventional activators based on compounds of group 13 of the Periodic Table (IUPAC), e.g. organo aluminium, such as aluminium alkyl compounds (e.g. triethylaluminium) compounds, can be mentioned. Additionally, in case of the (co)polymerisation of polypropylene or higher olefins, one or more external donors can be used which may be selected e.g. from silanes or from the list of internal donor of point (4) above.

It is also possible to include other catalyst component(s) than said ZN components to the catalyst of the invention.

The used amounts/ratios of the compounds to form a reaction product and to keep the catalyst composition in liquid state during the emulsion formation step are also within the skills of a person in the field. Such solutions can be prepared e.g. according or analogously to methods described in the prior art literature. As an example:
(a) by dissolving a magnesium compound, e.g. Mg dialkyl of Mg halide, such as MgCl₂, optionally in elevated temperature, in a carboxylic acid, an amine or, preferably, an alcohol, e.g. a mono or polyhydric alcohol, such as R₁OH, wherein R₁ is as defined above in formula (I), e.g. C₂₋₁₂ alkyl, suitably C₄₋₁₂-alkyl, such as n-butanol,2-ethyl-1-hexanol, or phenol,
   optionally in the presence of an inert solvent, in a manner described e.g. in US 5 212 133, US 5 188 999, EP 713 886 and WO 98 44009; and by adding the other compounds of the invention;
(b) by forming a solution of a Mg compound with an Al compound as such in elevated temperature, or in the presence of an aromatic component and/or a chlorinated hydrocarbon, analogously to the methods described in EP 536 840 and/or EP 083 073/EP 083 074; and, preferably, by adding a transition metal compound, e.g. TiCl₄, and optional other compounds to the obtained liquid composition while keeping the solution in liquid state for the dispersing step;
(c) by heating alkoxides of Mg and Ti, or a combination of halogenides and alkoxides of Mg and Ti. Alternatively, Mg halogenide and Ti alkoxides can be treated with excess of HCl to form a solution. See e.g. EP 876 318 for preparing such Mg- and Ti based solution, wherein the other compounds of the invention can be added;
(d) by using the principles described in EP 856 013, wherein Mg-component, e.g. Mg alkoxides, Mg hydrocarbyl alkoxides or Mg hydrocarbyl, in hexane + (CO₂ or SO₂) form a Mg-based solution. To said solution the other compounds of the invention can be added;
(e) by reacting a magnesium hydrocarbyloxy compound with a chlorine-containing compound in a non-polar hydrocarbon solvent; and by adding a chlorine containing tetravalent titanium compound, e.g. analogously to WO 01/55230, to form a soluble Mg-Al-Ti complex to be used in the present invention.

In the following, the first and second embodiments are explained in more detail.

### First embodiment

In a first embodiment of the inventive process, the group 1-3 metal used in step a of the inventive process is preferably magnesium, and the liquid organic medium comprises preferably a C₆-C₁₀ aromatic hydrocarbon or a mixture, preferably toluene.

As electron donor compound to be reacted with the said Group 1-3 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a C₂-C₁₆ alkanol and/or diol, and is preferable dioctyl phthalate.

The reaction for the preparation of the Group 1-3 metal complex is generally carried out at a temperature of 20° to 80°C, and in case that the Group 1-3 metal is magnesium, the preparation of the magnesium complex is carried out at a temperature of 50° to 70°C.

The compound of a transition metal of group 4-6 is preferably a compound of a Group 4 metal. The Group 4 metal is preferably titanium, and its compound to be reacted with the complex of a Group 1-3 is preferably a halide.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

The complex of the Group 1-3 metal is preferably Group 2 metal, and more preferably a magnesium complex. In a further preferred embodiment, the present invention is directed to a process for producing catalysts of the Ziegler-Natta type in the form of particles having a predetermined size range, said process comprising: preparing a solution of magnesium complex by reacting an alkoxy magnesium compound and an electron donor or precursor thereof in a C₆-C₁₀ aromatic liquid reaction medium; reacting said magnesium complex with a compound of at least one fourvalent Group 4 metal at a temperature greater than 10°C and less than 60°C to produce an emulsion of a denser, TiCl₄/toluene-insoluble, oil dispersed phase having, Group 4 metal/Mg mol ratio 0.1 to 10 in an oil disperse phase having Group 4 metal/Mg mol ratio 10 to 100; agitating the emulsion, optionally in the presence of an emulsion stabilizer, in order to maintain the particles of said dispersed phase within the average size range 5 to 200µm, and solidifying said particles of the dispersed phase by heating.

The said disperse and dispersed phases in the first embodiment of the invention are thus distinguishable from one another by the fact that the denser oil, if contacted with a solution of titanium tetrachloride in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal - which is the precursor of the ultimate catalyst component - becomes the dispersed phase, and proceeds through the further processing steps to the final dry particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The morphology is preserved during the heating to solidify the particles, and of course throughout the final washing and drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, a particularly favoured ester being dioctyl phthalate. The donor may conveniently be formed in situ by reaction of an aromatic carboxylic acid chloride precursor with a C₂-C₁₆ alkanol and/or diol. The liquid reaction medium preferably comprises toluene.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70-150°C, usually at 90-110°C. Preparation of the magnesium complex may be carried out over a wide range of temperatures, 20 to 80°C being preferred, 50 to 70°C most preferred.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the Group 4 metal. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the Group 4 metal compound at a lower temperature, contrary to previous practice, to bring about the formation of a two-phase, oil-in-oil, product.

Use of an aromatic medium for preparation of the Mg complex contributes to consistent product morphology and higher bulk density. Catalyst bulk density and morphology correlate with product bulk density and morphology the so-called "replica effect".

The method of the invention sharply reduces the volumes of solvent to be handled and thus improving process economics.

The liquid medium used as solvent can be aromatic or a mixture of aromatic and aliphatic hydrocarbons, preferably aromatic and is more preferably selected from hydrocarbons such as substituted and unsubstituted benzenes, preferably from alkylated benzenes, even more preferably from toluene and the xylenes, and is most preferably toluene. The molar ratio of said aromatic medium to magnesium is preferably less than 10, for instance from 4 to 10, preferably from 5 to 9.

The recovered particulate product is washed at least once, preferably at least twice, most preferably at least three times with a hydrocarbon, which preferably is selected from aromatic and aliphatic hydrocarbons, preferably with toluene, particularly with hot (e.g. 90°C) toluene, which might include a small amount, preferably a few vol-%, such as about 5 vol-% of TiCl₂ in it. A further wash is advantageously performed with heptane, most preferably with hot (e.g. 90°C) heptane, and yet a further wash with pentane. A washing step typically includes several substeps. A favoured washing sequence is, for example, one wash with toluene at 90°C, two washes with heptane at 90°C and one or two washes with pentane at room temperature.

The washing can be optimized to give a catalyst with novel and desirable properties. Finally, the washed catalyst component is dried, as by evaporation or flushing with nitrogen.

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesium, alkyl magnesium alkoxides, alkyl magnesium halides and magnesium dihalides.

Monohydric alcohols suitable for preparing the alkoxy magnesium compound are C₄-C₁₂alkyl-OH, particularly 2-ethyl-1-hexanol.

Preferably, essentially all of the aromatic carboxylic acid ester is a reaction product of a carboxylic acid halide, preferably a dicarboxylic acid dihalide, more preferably an unsaturated α,β-dicarboxylic acid dihalide, most preferably phthalic acid dichloride, with the monohydric alcohol.

The compound of a fourvalent Group 4 metal compound containing a halogen is preferably a titanium tetrahalide, particularly titanium tetrachloride.

The reaction conditions used in the claimed process may be varied according to the used reactants and agents.

In addition to titanium tetrachloride also other chlorinating agents can be used in a manner known in the art, such as chlorinated hydrocarbons or chlorinated silanes

### Second embodiment

As explained above for the second embodiment, said at least a compound of group 1 to 3 of the Periodic Table (IUPAC), optionally prereacted with an internal donor compound, is reacted with a compound selected from at least one transition metal compound of group 4 to 10 of the Periodic Table (IUPAC), or a compound of an actinide or lanthanide to form a reaction product, which is then mixed with an inert organic solvent, said solvent being immiscible with the reaction product and inert in relation to the compounds and said solvent forming the continuous phase of the emulsion.

### Dispersed phase

The solution dispersed in the immiscible solvent can be any solution prepared from the catalyst component(s) forming compounds, provided that it is in a form of a liquid when dispersed into the continuous phase. Said term "solution" is understood herein broadly to include any "solutions" prepared by dissolving the compounds to (a) one of said compounds in liquid form, or (b) to an inert solvent, as well as "solutions" prepared from (c) melts of said compounds; as described herein below.

The term "the continuous phase is inert in relation to said compounds" means herein that the continuous phase is chemically inert with respect to the solidification reactions of the catalyst component occurring in the droplets, i.e. no significant solidification reactions of the catalyst component take place between the contents of the continuous phase and the contents of the dispersed phase. Thus the solid particles of the catalyst are formed in the droplets from the compounds which originate from the dispersed phase (i.e. are provided to the emulsion in a solution dispersed into the continuous phase).

In case of an inert solvent, any suitable solvent which dissolves said compounds may be used, preferably an organic solvent, such as aliphatic or aromatic hydrocarbon, e.g. pentane, hexane, heptane, toluene, benzene etc. A mixture of solvents may also be used, provided that said mixture dissolves the compounds and is immiscible with the continuous phase at least during the emulsion formation step.

### Continuous phase

The solvent used to form the continuous phase is chosen, as stated above, to be inert and immiscible at least at the conditions (e.g. temperature) used during the dispersing step. Said solvent may also be a mixture of one or more solvents.

Furthermore, the solvent is chosen so that the compounds and possible intermediate(s) thereof which form the solidifying catalyst component(s), as well as the solidified catalyst, are practically insoluble or only poorly soluble to the continuous phase.

In a preferred embodiment of the invention, said solvent forming the continuous phase is an inert solvent including halogenated organic solvents, particularly fluorinated organic solvents, preferably perfluorinated organic solvents, e.g. perfluorinated hydrocarbons and functionalised derivatives thereof, such as octadecafluorooctane and perfluorinated ethers, octadecafluorooctane being particularly preferred.

### Solidification step

The solidification of the catalyst component(s) in the dispersed droplets can be effected in various ways, e.g. by causing or accelerating the formation of said solid catalyst forming reaction products of the compounds present in the droplets. This can be effected, depending on the used compounds and/or the desired solidification rate, with or without a temperature change of the system.

In case all the reacting compounds are already present in the dispersed droplets, the rate of the solidification reactions occurring in said droplets may be accelerated by increasing the temperature of the dispersed phase in the emulsion system.

In a further embodiment, the solidification reactions of the compounds are started after the formation of the emulsion system. Accordingly, a solution of one or more of the starting compounds of a catalyst component(s) is first dispersed into the inert, immiscible solvent, and thereafter, the other(s) of the starting compounds is added to said first dispersed phase to start the solidification reactions therein. Again, heating or cooling can be used during or after such additions.

Alternatively the solidification may be effected by removing the solvent from the droplets or in case of a molten liquid catalyst by cooling the system.

The solidification may also be controlled by the reaction time.

Moreover, the solidification may be effected during the dispersing (droplet formation) step or after the emulsion system is formed, optionally, while heating or cooling the system.

If desired, the emulsion system may be subjected to a very rapid temperature change to cause a fast/immediate (e.g. in 0.1 to 10 s, such as in few seconds) solidification in the dispersed system.

The appropriate temperature change, i.e. an increase or a decrease in the temperature of an emulsion system, required for the desired solidification rate of the components cannot be limited to any specific range, but naturally depends on the emulsion system, i.a. on the used compounds and the concentrations/ratios thereof, and is chosen accordingly. It is also evident that any techniques may be used to provide sufficient heating or cooling effect to the dispersed system to cause the desired solidification.

In one embodiment the heat treatment is effected by bringing, e.g. dispersing, such as spraying or preferably siphoning, the emulsion system to an inert receiving medium. The temperature of the receiving system can be significantly higher than that of the emulsion to cause an instant solidification of the reaction product in the droplets. Temperature difference of e.g. 10 to 100°C, or 20 to 90°C, such as 50 to 80°C, e.g. 70 to 80°C can be used. The receiving medium can be gaseous, e.g. air, or a liquid, preferably a solvent, and suitably the same as used as the continuous phase in the formation of the emulsion. Thus e.g. a perfluorinated hydrocarbon as defined above or a mixture thereof with other solvents, e.g. with an aliphatic or aromatic hydrocarbon as defined above, can be used. Preferably the receiving medium is mixed during the siphoning step. The siphoning techniques are known in the art.

The solidified catalyst particles may be subjected to washing step(s).

In one preferred embodiment of the invention the catalyst is prepared by contacting a magnesium dihydrocarbyl compound, e.g. magnesium dialkyl, such as butyloctyl-Mg (BOMAG), with an alcohol R₁OH, wherein R₁ is as defined above, e.g. 2-ethyl-1-hexanol (EHA). To this solution an aluminium compound of formula Al(R₁)ₓX₃₋ₓ, wherein R₁, X and x are as defined above, preferably Al alkyl halide, such as EtAlCl₂, and/or a titanium compound, such as TiCl₄, is then added. In case that both the Al-and the Ti-compounds are added to Mg-R₁OH complex, then preferably the Al-compound is added first. The solution may contain additional solvents as described above, e.g. an aliphatic or aromatic solvent, such as n-heptane. Said solution can be formed at a temperature range between the ambient temperature to 100°C, e.g. 40 to 80°C, such as 50 to 70°C, e.g. 60°C. If TiCl₄ is added to the solution, this is preferably done at or below room temperature. The obtained solution is then dispersed, e.g. by mixing, to an immiscible solvent, e.g. to a perfluorinated hydrocarbon as defined above. The mixing is suitably carried out at room temperature, but e.g. lower or elevated temperatures may also be used. The solidification may be effected by changing rapidly the temperature of said emulsion system, e.g. by siphoning the emulsion to a receiving medium as disclosed above.

In a further embodiment, a magnesium alkyl is reacted with R₁OH as defined above and, optionally, with an aluminium compound, such as an alkyl aluminium halide, e.g. EtAlCl₂, to form a first solution, which is dispersed to an inert solvent, such as perfluorinated hydrocarbon as defined above. To the obtained dispersed phase, TiCl₄-solution is then added separately to cause the solidification of the thus formed catalyst component. The emulsion system can be heated during and/or after the addition of the TiCl₄. Additional inert solvents as defined above can also be used in the formation of said solutions. Furthermore, the dispersing order of the first solution and TiCl₄-solution can be changed.

Generally, in the final solid catalyst particles, the molar ratio of Mg:Ti can be e.g. between 10:1 to 1:10, preferably 5:1 to 1:1. The molar ratio of Ti:Al can be e.g. between 10:1 to 1:2, e.g. 3:1 to 1:1. Furthermore, a suitable molar ratio of Mg:R₁OH is between 1:1 to 1:4, preferably 1:1.5 to 1:3.

The catalyst components according to the embodiments of the invention can be used in processes for polymerising olefins. Said polymerisation processes can be carried out as exemplified below.

### Polymerisation process

As mentioned above the catalyst particles of the invention can be used as such or together with a separate cocatalyst and/or an electron donor, as a Ziegler-Natta catalyst for the (co)polymerisation of an olefin in a manner known in the art. It is also possible to combine said catalyst with one or more other Zn and/or non-ZN catalysts.

The olefin to be polymerised using the catalyst system of the invention can be any olefin polymerisable in a coordination polymerisation including an alpha-olefin alone or as a mixture with one or more comonomers. Preferable olefins are ethylene or propene, or a mixture of ethylene or propene with one or more alpha-olefin(s). Preferable comonomers are C2-C12 olefins, preferably C4-C10 olefins, such as 1-butene, isobutene, 1-pentene, 1-hexene, 4-methyl-1-pentene, 1-heptene, 1-octene, 1-nonene, 1-decene, as well as diene, such as butadiene, 1,7-octadiene and 1,4-hexadiene, or cyclic olefins, such as norbornene, and any mixtures thereof.

Polyethylene and any copolymers thereof are particularly contemplated, as are polypropylene homopolymers and any copolymers thereof.

Polymerisation may be effected in one or more, e.g. one, two or three polymerisation reactors, using conventional polymerisation techniques, in particular gas phase, solution phase, slurry or bulk polymerisation. Polymerisation can be a batch or continuous polymerisation process. Generally a combination of slurry (or bulk) and at least one gas phase reactor is preferred, particularly with gas phase operation coming last.

For slurry reactors, the reaction temperature will generally be in the range of 40 to 110 °C (e.g. 60 -110°C), the reactor pressure will generally be in the range 5 to 80 bar (e.g. 50-60 bar), and the residence time will generally be in the range 0.3 to 5 hours (e.g. 0.5 to 2 hours). The diluent used will generally be an aliphatic hydrocarbon having a boiling point in the range -70 to +100 °C. In such reactors, polymerisation may, if desired, be effected under supercritical conditions.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours.

Generally the quantity of catalyst used will depend upon the nature of the catalyst, the reactor types and conditions and the properties desired for the polymer product. Conventional catalyst quantities, such as described in the publications referred herein, may be used.

With the method of the invention a catalyst system with a good morphology is obtained and the catalyst exhibits high catalytic activity. The morphology correlates with product morphology and - the so-called "replica effect". Thus the catalyst leads to a polymer which also has advantageous properties, e.g. high bulk density.

Some preferred embodiments of the invention are described, by way of illustration, in the following Examples.

### Examples

The following examples are provided by way of illustration of the invention. All the used starting materials and solvents are commercially available:
(C₄H₉)_{1,5}Mg(C₈H₁₇)_{0,5} in 20 wt-% heptane solution: supplied by Crompton, Germany (BOMAG); [Mg(Bu)_{1.5} (Oct)_{0.5}] in 20 wt-% solution in toluene: supplied by Crompton, Germany (BOMAG-A) ; EtAlCl₂ in 18.5 wt-% toluene solution: Crompton, Germany (EADC); triethylaluminium in 10 wt-% heptane solution (TEA-10) or in 20 wt-% heptane solution (TEA-20): Crompton, Germany; TiCl₄: Aldrich, Germany; octadecafluorooctane: P&M Scientific Industrial Association, Russia.

Examples 1 and 2 have been carried out according to the above first and second embodiments of the invention, respectively. MFR was determined according to ISO 1133 using 190°C, load as subscript. FRR means MFR₂₁:MFR₂. The particle size distribution was analysed by Coulter.

### Example 1

### Catalyst

A magnesium complex solution was prepared by slowly adding over a 40 minute period, with stirring, 110 ml of BOMAG-A to 38.9 ml of 2-ethylhexanol which had been cooled to 5°C in a 300 ml glass reactor. During the addition the reactor contents were maintained below 15°C. The temperature was then raised to 60°C and held at that level for 30 minutes with stirring, at which time reaction was complete. 6.4 ml phthaloyl chloride was then added over an 11 minute period. The reactor contents were stirred at 60°C for 20 minutes, 12.9 ml 1-chlorobutane was added, and stirring continued for another 15 minutes at 60°C. The resulting stable, yellowish Mg complex solution was cooled to room temperature.

19.5 ml TiCl₄, 5 ml heptane and 28.7 of the above-prepared Mg complex solution were reacted at 25°C in a 300 ml glass reactor. After 5 minutes, reaction was complete and a dark red emulsion had formed. The temperature was raised to 50°C, 2 ml of Viscoplex 1-254 (Tradename) (40-44% of acrylic polymer in base oil) was added, and the reactor contents were stirred for 30 minutes. The resulting stabilized emulsion was then heated to 90°C, with stirring, for 10 minutes to solidify the particles forming the dispersed phase. After settling and syphoning the solids (2.6 grams) underwent washing with:
1. 100 ml toluene at 90°C for 30 minutes;
2. 60 ml heptane, at 90°C for 20 minutes;
3. 60 ml heptane, at 35°C for 10 minutes,
4. 60 ml pentane, at 30°C for 5 minutes; and
5. 60 ml pentane, at 30°C for 5 minutes.

The solids were then dried at 60°C by nitrogen purge. The particles were established by microscopic examination to be perfectly spherical in shape. The Coulter PSD is shown in Figure 1.

The composition and morphology of the products of Example 1 is summarized in the following Table 1.

**TABLE 1**

| **Example** | **Ti%** | **Mg%** | **Dop%*** | **Coulter 10%µm** | **Coulter 50%µm** | **Coulter 90%µm** |
|---|---|---|---|---|---|---|
| 1 | 3.3 | 12.6 | 27.5 | 41.6 | 28 | 11.7 |

| | | | | | | |
|---|---|---|---|---|---|---|
| * Dioctyl phthalate (internal electron donor) ** Measured with Coulter LS200 at room temperature with n-heptane as medium | | | | | | |

### Test polymerisation

0.9 ml triethyl aluminium (TEA) (co-catalyst), 0.12 ml cyclohexyl methyl dimethoxy silane (CMMS) as an external donor and 30 ml n-pentane were mixed and allowed to react for 5 minutes. Half of the mixture was then added to a polymerisation reactor and the other half was mixed with 20 mg of the components prepared above. After an additional 5 minutes the component TEA/donor/n-pentane mixture was added to the reactor. The Al/Ti mole ratio of the resulting polymerisation catalyst was 250 mol/mol and the Al/CMMS mole ratio was 10 mol/mol.

Propylene bulk polymerisation was carried out in a stirred 51 tank reactor.

70 mmol hydrogen and 1400 g propylene were introduced into the reactor and the temperature was raised within 15 minutes to the polymerisation temperature of 70°C. The polymerisation time at 70°C was 60 minutes, after which the polymer formed was taken out from the reactor. The results of the polymerisation evaluations are summarised in the following Table 2.

**TABLE 2**

| **Example** | **Activity kgPP/gCat** | **MFR¹g/10m in** | **XS²%** | **BD³ g/ml** | **% particles <0.1mm** |
|---|---|---|---|---|---|
| 1 | 24.1 | 5.5 | 1.7 | 0.45 | 0 |

| | | | | | |
|---|---|---|---|---|---|
| ¹ ISO 1133, 2.16 kg load at 230°C ² xylene-soluble fraction of product at 25°C ³ polymer-bulk density (ASTM D 1895) | | | | | |

The polymer particles were spherical, with a markedly narrow size distribution: more than 75% of the product was of 0.5-1.00 mm particle diameter.

### Comparative Example 1

In a comparative test, the surface area and catalytical activities of a catalyst prepared according to the invention and a catalyst according to the state of art have been compared.

The catalyst of the invention was prepared as in Example 1 having the final composition of Dop%= 26.30, Ti%= 3.6, Mg%=12.6. Surface area (measured by a conventional BET method using N₂) was too low to be determined by BET.

The comparative catalyst containing Dop%= 15.0, Ti%= 3.6, Mg%= 8.4 and was prepared by forming a reaction product of 90 ml BOMAG-A, 31.8 ml 2-ethylhexanol and 4.0 ml 1,2-phthaloyl chloride in accordance with Example 1. Then, 2.0 g 20 micron silica (Crosfield, ES747 JR) in 19.5 ml TiCl₄ were added to 32 g of above complex, temperature was increased to 90 C over 30 min and held therein a further 30 min. The product was the isolated, washed and dried. Surface area was measured by BET: 155 m²/g.

The polymerisations were carried out as in Example 1: It was shown that the activity of the catalyst of the invention 29,0 kg PP/(g cat x hour) was in the same range as that of the comparative supported catalyst prepared in the Comparative Example.

### Example 2

### Catalyst

In a 20 ml septa bottle 1.2 ml (1.05 mmol) of BOMAG was added at room temperature in inert conditions. Then 0.328 ml (2.10 mmol) of 2-ethyl-hexanol was added and the components were allowed to react at 60 °C for 30 min while mixing with a magnetic stirrer. After this the solution was cooled down to room temperature, 0.745 ml (1.05 mmol) of EADC was added and the obtained mixture was mixed at 60 °C for 30 min. After this the solution was cooled down to room temperature and 0.115 ml (1.05 mmol) of TiCl₄ was added. The obtained solution was dispersed by mixing (105 rpm) in 4.0 ml of octadecafluorooctane to create an emulsion.

In another 150 ml glass reactor 32 ml of octadecafluorooctane was introduced in inert conditions together with 11 ml of heptane. The solvent mixture was stirred by a propeller (mixing speed was 300 rpm). The temperature was raised to 90-95°C. The solidification was effected by siphoning the catalyst complex emulsion in small portions, during 10 min into the hot receiving solution. After the siphoning the droplets were allowed to stabilise in the receiving vessel for 15 min. After this the receiving solution was cooled down, octadecafluorooctane was removed by siphoning, and the catalyst was washed two times with 30 ml portions of n-heptane. Morphology was good in the resulting catalyst material, showing spherical particles with an average particle size of 70 µm.

Composition of the catalyst: Mg 6.99 wt-%, Ti 7.42 wt-%. The added molar ratio of Mg:Ti:Al had been 1:1:1 and the obtained catalyst complex of the invention shows the molar ratio of Mg:Ti:Al of 1.9:1:0.3. The spherical particles with a smooth surface are illustrated in Figure 2.

### Test polymerisations

The catalyst was tested in a homo-polymerisation of ethene. Two different polymerisation conditions were used in order to produce both high and low molecular flow rate material (HMFR and LMFR). 5 bar of H₂ pressure corresponded to LMFR polymerisation conditions, and 17.5 bar to the HMFR conditions. TEA-10 was used as the cocatalyst. An Al/Ti molar ratio of 15 was used in the homopolymerisations (0.9 - 1.5 ml TEA).

1800 ml (1.127 kg, 15.6 mol) of pentane was introduced into a 3 1 autoclave reactor and the temperature was adjusted to 90 °C. About 30 mg of Catalyst was added into a feed vessel together with 10 ml (6.3 g, 87 mmol) of pentane. The cocatalyst was added into another feed vessel. The cocatalyst was first let into the reactor and thereafter Catalyst. An additional feed vessel was connected to provide the 5 and 17.5 bar of H₂ pressure (110 - 390 mmol). The polymerisation was started by introducing H₂ together with the ethene monomer. A total pressure of 13.7 bar was maintained by the ethene feed throughout the polymerisation. The polymerisation was carried out for 1 h at 90 °C. The polymerisation was stopped by venting off the monomer and the pentane.

For the comparison the above polymerisation test was carried out but using a silica supported catalyst as Reference catalyst prepared according to EP 688 794 of Borealis, Example 3, except silica particles with an average particle size of 20 µm (supplied by Grace) were used.

### Polymerisation results obtained using Catalyst and Reference catalyst

**Table 1. The polymerisation results in LMFR and HMFR conditions**

| Unit/Catalyst | Catalyst | Reference catalyst |
|---|---|---|
| LFMR Activity, kg PE/g cat,h | 14.60 | 4.6 |
| MFR₂ | 1.0 | 0.52 |
| MFR₅ | 3.1 | |
| MFR₂₁ | 31.4 | 22.0 |
| FRR (21/2) | 31.4 | 42.0 |
| FRR (21/5) | 10.1 | |
| HMFR Activity, kg PE/g cat,h | 5.17 | 2.33 |
| MFR₂ | 66 | 72 |

## Claims

1. A Ziegler-Natta catalyst for olefin polymerisation in the form of solidified particles, said particles having a spherical shape, a predetermined particles size distribution in an average size range of 1 to 500 µm and a surface area of less than 20 m²/g as measured by the BET method, wherein the catalytically active sites are distributed throughout the particles, said particles being obtainable by a process comprising the steps of
(a) contacting at least one compound of group 1 to 3 of the Periodic Table (IUPAC) with at least one compound selected from
(i) transition metal compound of group 4 to 10 of the periodic table (IUPAC), or
(ii) a compound of an actinide or lanthanide to form a reaction product;
(b) preparing an emulsion from the reaction product of a) and a liquid medium in which emulsion the product of a) forms the droplets of the dispersed phase; and
(c) solidifying the droplets of the dispersed phase to form the solidified particles, and optionally
(d) recovering said solidified catalyst particles.

2. Ziegler-Natta catalyst according to claim 1, said catalyst having a catalytic activity of more than 10 kg polymer per g catalyst per hour.

3. The catalyst comprising a catalyst component in the form of particles according to claim 1 or claim 2, said particles being obtainable by the process wherein in contacting step a), a Mg-compound is used as said compound of group 2 of the Periodic Table (IUPAC).

4. The catalyst comprising a catalyst component in the form of particles according to claim 3, said particles being obtainable by the process wherein in contacting step a), said Mg-compound is a magnesium dialkyl compound, optionally prereacted with an alcohol of formula R₁OH, wherein R₁ is X a linear or branched C₁₋₂₀-hydrocarbyl group.

5. The catalyst comprising a catalyst component in the form of particles according to any one of claims 1 to 4, said particles being obtainable by the process wherein in contacting step a), a tetravalent Ti-compound is used as said compound of group 4 of the Periodic Table (IUPAC).

6. The catalyst comprising a catalyst component in the form of particles according to any of the preceding claims, said particles being obtainable by the process wherein in contacting step a), a compound of group 1 to 3 of the Periodic Table (IUPAC) is contacted with a transition metal compound of group 4 to 10 of the Periodic Table (IUPAC) and at least one further compound selected from an electron donor and/or an aluminium compound.

7. The catalyst comprising a catalyst component in the form of particles according to any of the preceding claims, said particles being obtainable by the process wherein in contacting step a), a compound of group 2 is contacted with a compound of group 4 of the Periodic Table (IUPAC), and, optionally, with (c) a further catalyst component forming compound selected from aluminium compounds and external donors.

8. The catalyst comprising a catalyst component in the form of particles according to any of the preceding claims, said particles being obtainable by a process, wherein the emulsion is stabilized by adding an emulsion stabilizing agent to the forming emulsion.

9. The catalyst comprising a catalyst component in the form of particles according to any of the preceding claims, said particles being obtainable by the process, wherein a turbulence minimizing agent (TMA) is added to the reaction mixture before solidifying the droplets of the dispersed phase, said TMA being inert and soluble in the reaction mixture under the reaction conditions.

10. The catalyst comprising a catalyst component in the form of particles according to any of the preceding claims, said particles being obtainable by the process wherein the solidification is effected by subjecting the formed emulsion to a temperature change.

11. The catalyst comprising a catalyst component in the form of particles according to any of the preceding claims, said particles being obtainable by the process wherein the formed emulsion is further dispersed into an inert receiving medium with a different temperature to cause a rapid solidification of the dispersed catalyst component.

12. The catalyst comprising a catalyst component in the form of particles according to any of the preceding claims, said particles being obtainable by the process wherein the contacting step a) is carried out in an inert organic liquid medium which is selected from a linear or cyclic alkane or alkene, an aromatic hydrocarbon and/or a halogen-containing hydrocarbon, or mixtures thereof

13. The catalyst comprising a catalyst component in the form of particles according to any of the preceding claims, said particles being obtainable by the process wherein in contacting step a), said compound of group 1 to 3 of the Periodic Table (IUPAC) is used in a prereacted form which is obtainable by reacting it with an electron donor or a precursor thereof in an inert organic liquid medium, and adding said prereacted compound of group 1 to 3 in said inert organic liquid medium to said compound selected from a transition metal compound of group 4 to 10 of the Periodic Table (IUPAC), or a compound of an actinide or lanthanide to form a reaction product.

14. The catalyst comprising a catalyst component in the form of particles according to any of claims 1 to 11, said particles being obtainable by the process wherein the product of a) is dispersed in an inert organic liquid medium, said liquid medium being immiscible with the product and inert in relation to the compounds and said liquid medium forming the continuous phase of the emulsion.

15. The catalyst comprising a catalyst component in the form of particles according to claim 14, wherein the liquid medium is selected from a fluorinated hydrocarbon or a functionalised derivative thereof, or mixtures thereof

16. The catalyst comprising a catalyst component in the form of particles according to claim 15, wherein the liquid medium is a perfluorinated hydrocarbon.

17. The catalyst comprising a catalyst component in the form of particles as in any of claims 1 to 16 and at least one further compound selected from a cocatalyst and external donor.

18. Process for preparing a Ziegler-Natta catalyst for olefin polymerisation comprising a catalyst component in the form of solidified particles wherein the catalytically active sites are distributed throughout the particles, said particles having a predetermined particles size distribution in an average size range of 1 to 500 µm, a spherical shape and a surface area of less than 20 m²/g as measured by the BET method, said process comprising the steps of
(a) contacting at least one compound of group 1 to 3 of the Periodic Table (IUPAC) with at least one compound selected from
(i) transition metal compound of group 4 to 10 of the periodic table (IUPAC), or
(ii) a compound of an actinide or lanthanide to form a reaction product;
(b) preparing an emulsion from the reaction product of a) and a liquid medium in which emulsion the product of a) forms the droplets of the dispersed phase; and
(c) solidifying the droplets of the dispersed phase to form the solidified particles, and optionally
(d) recovering said solidified catalyst particles.

19. Use of a catalyst in accordance with any one of claims 1 to 17 in the process for polymerising olefins, in particular C₂ to C₁₀ α-olefines, preferably propene or ethene or copolymers thereof

## Patentansprüche

1. Ziegler-Natta-Katalysator zur Olefinpolymerisation in der Form von verfestigten Partikeln, wobei die Partikel eine kugelförmige Form, eine vorherbestimmte Partikelgrößenverteilung in einem durchschnittlichen Größenbereich von 1 bis 500 µm und eine Oberfläche von weniger als 20 m²/g haben, gemessen mittels dem BET-Verfahren, wobei die katalytisch aktiven Stellen durchweg durch die Partikel verteilt sind, wobei die Partikel durch ein Verfahren erhältlich sind, umfassend die Schritte:
(a) In-Kontakt-Bringen von mindestens einer Verbindung der Gruppe 1 bis 3 des Periodensystems (IUPAC) mit mindestens einer Verbindung, ausgewählt aus
(i) einer Übergangsmetallverbindung der Gruppe 4 bis 10 des Periodensystems (IUPAC) oder
(ii) einer Verbindung von einem Actinoid oder Lanthanoid, um ein Reaktionsprodukt zu bilden;
(b) Herstellen von einer Emulsion aus dem Reaktionsprodukt aus a) und einem flüssigen Medium, in welcher Emulsion das Produkt aus a) die Töpfchen von der dispergierten Phase bildet; und
(c) Verfestigen der Tröpfchen von der dispergierten Phase, um die verfestigten Partikel zu bilden, und optional
(d) Gewinnen der verfestigten Katalysatorpartikel.

2. Ziegler-Natta-Katalysator nach Anspruch 1, wobei der Katalysator eine katalytische Aktivität von mehr als 10 kg Polymer pro g Katalysator pro Stunde hat.

3. Katalysator, umfassend einen Katalysatorbestandteil in der Form von Partikeln nach Anspruch 1 oder 2, wobei die Partikel durch das Verfahren erhältlich sind, wobei in dem Schritt des In-Kontakt-Bringens a) eine Mg-Verbindung als die Verbindung der Gruppe 2 des Periodensystems (IUPAC) verwendet wird.

4. Katalysator, umfassend einen Katalysatorbestandteil in der Form von Partikeln nach Anspruch 3, wobei die Partikel durch das Verfahren erhältlich sind, wobei in dem Schritt des In-Kontakt-Bringens a) die Mg-Verbindung eine Magnesiumdialkyl-Verbindung ist, die optional mit einem Alkohol der Formel R₁OH vorreagiert ist, wobei R₁ eine lineare oder verzweigte C₁₋₂₀-Hydrocarbylgruppe ist.

5. Katalysator, umfassend einen Katalysatorbestandteil in der Form von Partikeln nach einem der Ansprüche 1 bis 4, wobei die Partikel durch das Verfahren erhältlich sind, wobei in dem Schritt des In-Kontakt-Bringens a) eine tetravalente Ti-Verbindung als die Verbindung der Gruppe 4 des Periodensystems (IUPAC) verwendet wird.

6. Katalysator, umfassend einen Katalysatorbestandteil in der Form von Partikeln nach einem der vorhergehenden Ansprüche, wobei die Partikel durch das Verfahren erhältlich sind, wobei in dem Schritt des In-Kontakt-Bringens a) eine Verbindung der Gruppe 1 bis 3 des Periodensystems (IUPAC) mit einer Übergangsmetallverbindung der Gruppe 4 bis 10 des Periodensystems (IUPAC) und mindestens einer weiteren Verbindung, ausgewählt aus einem Elektronendonor und/oder einer Aluminiumverbindung, in Kontakt gebracht wird.

7. Katalysator, umfassend einen Katalysatorbestandteil in der Form von Partikeln nach einem der vorhergehenden Ansprüche, wobei die Partikel durch das Verfahren erhältlich sind, wobei in dem Schritt des In-Kontakt-Bringens a) eine Verbindung der Gruppe 2 mit einer Verbindung der Gruppe 4 des Periodensystems (IUPAC) und optional mit (c) einer weiteren katalysatorbestandteilbildenden Verbindung, ausgewählt aus Aluminiumverbindungen und externen Donoren, in Kontakt gebracht wird.

8. Katalysator, umfassend einen Katalysatorbestandteil in der Form von Partikeln nach einem der vorhergehenden Ansprüche, wobei die Partikel durch ein Verfahren erhältlich sind, wobei die Emulsion durch die Zugabe eines Mittels zur Emulsionsstabilisierung zu der sich bildenden Emulsion stabilisiert wird.

9. Katalysator, umfassend einen Katalysatorbestandteil in der Form von Partikeln nach einem der vorhergehenden Ansprüche, wobei die Partikel durch das Verfahren erhältlich sind, wobei ein Mittel zur Minimierung von Turbulenzen (TMA für Engl. turbulence minimizing agent) zu der Reaktionsmischung zugegeben wird, bevor die Tröpfchen von der dispergierten Phase verfestigt werden, wobei das TMA inert ist und in der Reaktionsmischung unter den Reaktionsbedingungen löslich ist.

10. Katalysator, umfassend einen Katalysatorbestandteil in der Form von Partikeln nach einem der vorhergehenden Ansprüche, wobei die Partikel durch das Verfahren erhältlich sind, wobei die Verfestigung bewirkt wird, indem die gebildete Emulsion einer Temperaturänderung unterworfen wird.

11. Katalysator, umfassend einen Katalysatorbestandteil in der Form von Partikeln nach einem der vorhergehenden Ansprüche, wobei die Partikel durch das Verfahren erhältlich sind, wobei die gebildete Emulsion weiter in einem inerten Aufnahmemedium mit einer unterschiedlichen Temperatur dispergiert wird, um eine schnelle Verfestigung von dem dispergierten Katalysatorbestandteil zu verursachen.

12. Katalysator, umfassend einen Katalysatorbestandteil in der Form von Partikeln nach einem der vorhergehenden Ansprüche, wobei die Partikel durch das Verfahren erhältlich sind, wobei der Schritt des In-Kontakt-Bringens a) in einem inerten organischen flüssigen Medium durchgeführt wird, das aus einem linearen oder cyclischen Alkan oder Alken, einem aromatischen Kohlenwasserstoff und/oder einem halogenhaltigen Kohlenwasserstoff oder aus Mischungen davon ausgewählt ist.

13. Katalysator, umfassend einen Katalysatorbestandteil in der Form von Partikeln nach einem der vorhergehenden Ansprüche, wobei die Partikel durch das Verfahren erhältlich sind, wobei in dem Schritt des In-Kontakt-Bringens a) die Verbindung der Gruppe 1 bis 3 des Periodensystems (IUPAC) in einer vorreagierten Form verwendet wird, die erhältlich ist, indem sie in einem inerten organischen flüssigen Medium mit einem Elektronendonor oder einem Vorläufer davon zur Reaktion gebracht wird, und die vorreagierte Verbindung der Gruppe 1 bis 3 in dem inerten organischen flüssigen Medium zu der Verbindung, die aus einer Übergangsmetallverbindung der Gruppe 4 bis 10 des Periodensystems (IUPAC) ausgewählt ist, oder einer Verbindung von einem Actinoid oder Lanthanoid zugegeben wird, um ein Reaktionsprodukt zu bilden.

14. Katalysator, umfassend einen Katalysatorbestandteil in der Form von Partikeln nach Anspruch 1 bis 11, wobei die Partikel durch das Verfahren erhältlich sind, wobei das Produkt aus a) in einem inerten organischen flüssigen Medium dispergiert wird, wobei das flüssige Medium nicht mit dem Produkt mischbar ist und in Bezug auf die Verbindungen inert ist und wobei das flüssige Medium die kontinuierliche Phase der Emulsion bildet.

15. Katalysator, umfassend einen Katalysatorbestandteil in der Form von Partikeln nach Anspruch 14, wobei das flüssige Medium aus einem fluorierten Kohlenwasserstoff oder einem funktionalisierten Derivat davon oder aus Mischungen davon ausgewählt ist.

16. Katalysator, umfassend einen Katalysatorbestandteil in der Form von Partikeln nach Anspruch 15, wobei das flüssige Medium ein perfluorierter Kohlenwasserstoff ist.

17. Katalysator, umfassend einen Katalysatorbestandteil in der Form von Partikeln nach einem der Ansprüche 1 bis 16 und mindestens eine weitere Verbindung, ausgewählt aus einem Cokatalysator und einem externen Donor.

18. Verfahren zur Herstellung eines Ziegler-Natta-Katalysators zur Olefinpolymerisation, umfassend einen Katalysatorbestandteil in der Form von verfestigten Partikeln, wobei die katalytisch aktiven Stellen durchweg durch die Partikel verteilt sind, wobei die Partikel eine vorherbestimmte Partikelgrößenverteilung in einem durchschnittlichen Größenbereich von 1 bis 500 µm, eine kugelförmige Form und eine Oberfläche von weniger als 20 m²/g haben, gemessen mittels dem BET-Verfahren, wobei das Verfahren die Schritte umfasst:
(a) In-Kontakt-Bringen von mindestens einer Verbindung der Gruppe 1 bis 3 des Periodensystems (IUPAC) mit mindestens einer Verbindung, ausgewählt aus
(i) einer Übergangsmetallverbindung der Gruppe 4 bis 10 des Periodensystems (IUPAC) oder
(ii) einer Verbindung von einem Actinoid oder Lanthanoid, um ein Reaktionsprodukt zu bilden;
(b) Herstellen von einer Emulsion aus dem Reaktionsprodukt aus a) und einem flüssigen Medium, in welcher Emulsion das Produkt aus a) die Töpfchen von der dispergierten Phase bildet; und
(c) Verfestigen der Tröpfchen von der dispergierten Phase, um die verfestigten Partikel zu bilden, und optional
(d) Gewinnen der verfestigten Katalysatorpartikel.

19. Verwendung von einem Katalysator nach einem der Ansprüche 1 bis 17 in dem Verfahren zum Polymerisieren von Olefinen, inbesondere von C₂ bis C₁₀ α-Olefinen, vorzugsweise von Propen oder Ethen oder von Copolymeren davon.

## Revendications

1. Catalyseur de Ziegler-Natta pour la polymérisation d'oléfines sous la forme de particules solidifiées, lesdites particules ayant une forme sphérique, une distribution prédéterminée des tailles particulaires dans une plage de tailles moyenne de 1 à 500 µm et une surface spécifique de moins de 20 m²/g comme mesuré par le procédé BET, dans lequel les sites actifs au plan catalytique sont distribués parmi les particules, lesdites particules pouvant être obtenues par un procédé comprenant les étapes consistant à :
(a) mettre en contact au moins un composé des groupes 1 à 3 du tableau périodique (IUPAC) avec au moins un composé choisi parmi les suivants :
(i) un composé de métal de transition des groupes 4 à 10 du tableau périodique (IUPAC) ou
(ii) un composé d'un actinide ou d'un lanthanide pour former un produit réactionnel ;
(b) préparer une émulsion à partir du produit réactionnel de (a) et d'un milieu liquide, dans laquelle émulsion le produit de (a) forme les gouttelettes de la phase dispersée ; et
(c) solidifier les gouttelettes de la phase dispersée pour former les particules solidifiées et éventuellement
(d) récupérer lesdites particules catalytiques solidifiées.

2. Catalyseur de Ziegler-Natta selon la revendication 1, ledit catalyseur ayant une activité catalytique supérieure à 10 kg de polymère par g de catalyseur par heure.

3. Catalyseur comprenant un composant catalytique sous la forme de particules selon la revendication 1 ou la revendication 2, lesdites particules pouvant être obtenues par le procédé dans lequel, lors de l'étape de contact (a), un composé de Mg est utilisé comme dit composé du groupe 2 du tableau périodique (IUPAC).

4. Catalyseur comprenant un composant catalytique sous la forme de particules selon la revendication 3, lesdites particules pouvant être obtenues par le procédé dans lequel, lors de l'étape de contact (a), ledit composé de Mg est un composé de dialkylmagnésium, qui a éventuellement pré-réagi avec un alcool de formule R₁OH, dans laquelle R₁ est un groupement hydrocarbyle linéaire ou ramifié en C₁-C₂₀.

5. Catalyseur comprenant un composant catalytique sous la forme de particules selon l'une quelconques des revendications 1 à 4, lesdites particules pouvant être obtenues par le procédé dans lequel, lors de l'étape de contact (a), un composé de Ti tétravalent est utilisé comme dit composé du groupe 4 du tableau périodique (IUPAC).

6. Catalyseur comprenant un composant catalytique sous la forme de particules selon l'une quelconque des revendications précédentes, lesdites particules pouvant être obtenues par le procédé dans lequel, lors de l'étape de contact (a), un composé des groupes 1 à 3 du tableau périodique (IUPAC) est mis en contact avec un composé de métal de transition des groupes 4 à 10 du tableau périodique (IUPAC) et au moins un autre composé choisi entre un donneur d'électrons et/ou un composé d'aluminium.

7. Catalyseur comprenant un composant catalytique sous la forme de particules selon l'une quelconque des revendications précédentes, lesdites particules pouvant être obtenues par le procédé dans lequel, lors de l'étape de contact (a), un composé du groupe 2 est mis en contact avec un composé du groupe 4 du tableau périodique (IUPAC) et, éventuellement, avec (c) un autre composant catalytique formant un composé choisi parmi les composés d'aluminium et les donneurs externes.

8. Catalyseur comprenant un composant catalytique sous la forme de particules selon l'une quelconque des revendications précédentes, lesdites particules pouvant être obtenues par un procédé dans lequel l'émulsion est stabilisée en ajoutant un agent de stabilisation d'émulsion à l'émulsion en cours de formation.

9. Catalyseur comprenant un composant catalytique sous la forme de particules selon l'une quelconque des revendications précédentes, lesdites particules pouvant être obtenues par le procédé dans lequel un agent minimisant la turbulence (TMA) est ajouté au mélange réactionnel avant de solidifier les gouttelettes de la phase dispersée, ledit TMA étant inerte et soluble dans le mélange réactionnel dans les conditions réactionnelles.

10. Catalyseur comprenant un composant catalytique sous la forme de particules selon l'une quelconque des revendications précédentes, lesdites particules pouvant être obtenues par le procédé dans lequel la solidification est effectuée en soumettant l'émulsion formée à un changement de température.

11. Catalyseur comprenant un composant catalytique sous la forme de particules selon l'une quelconque des revendications précédentes, lesdites particules pouvant être obtenues par le procédé dans lequel l'émulsion formée est en outre dispersée dans un milieu récepteur inerte avec une température différente pour provoquer une solidification rapide du composant catalytique dispersé.

12. Catalyseur comprenant un composant catalytique sous la forme de particules selon l'une quelconque des revendications précédentes, lesdites particules pouvant être obtenues par le procédé dans lequel l'étape de contact (a) est effectuée dans un milieu organique liquide inerte qui est choisi entre un alcane ou un alcène linéaire ou cyclique, un hydrocarbure aromatique et/ou un hydrocarbure contenant un halogène ou un de leurs mélanges.

13. Catalyseur comprenant un composant catalytique sous la forme de particules selon l'une quelconque des revendications précédentes, lesdites particules pouvant être obtenues par le procédé dans lequel, lors de l'étape de contact (a), ledit composé des groupes 1 à 3 du tableau périodique (IUPAC) est utilisé sous forme qui a pré-réagi et que l'on peut obtenir en le faisant réagir avec un donneur d'électrons ou un de ses précurseurs dans un milieu organique liquide inerte, et en ajoutant ledit composé, qui a pré-réagi, des groupes 1 à 3 dans ledit milieu organique liquide inerte audit composé choisi entre un composé de métal de transition des groupes 4 à 10 du tableau périodique (IUPAC) ou un composé d'un actinide ou d'un lanthanide pour former un produit réactionnel.

14. Catalyseur comprenant un composant catalytique sous la forme de particules selon l'une quelconque des revendications 1 à 11, lesdites particules pouvant être obtenues par le procédé dans lequel le produit de (a) est dispersé dans un milieu organique liquide inerte, ledit milieu liquide étant miscible avec le produit et inerte par rapport aux composés et ledit milieu liquide formant la phase continue de l'émulsion.

15. Catalyseur comprenant un composant catalytique sous la forme de particules selon la revendication 14, dans lequel le milieu liquide est choisi parmi un hydrocarbure fluoré ou un dérivé fonctionnalisé de celui-ci ou encore de leurs mélanges.

16. Catalyseur comprenant un composant catalytique sous la forme de particules selon la revendication 15, dans lequel le milieu liquide est un hydrocarbure perfluoré.

17. Catalyseur comprenant un composant catalytique sous la forme de particules selon l'une quelconque des revendications 1 à 16 et au moins un autre composé choisi entre un co-catalyseur et un donneur externe.

18. Procédé de préparation d'un catalyseur de Ziegler-Natta pour la polymérisation d'oléfines, comprenant un composant catalytique sous la forme de particules solidifiées, dans lequel les sites actifs au plan catalytique sont distribués dans toutes les particules, lesdites particules ayant une distribution prédéterminée de tailles particulaires dans une plage moyenne de tailles de 1 à 500 µm, une forme sphérique et une surface spécifique inférieure à 20 m²/g, comme mesuré par le procédé BET, ledit procédé comprenant les étapes consistant à :
(a) mettre en contact au moins un composé des groupes 1 à 3 du tableau périodique (IUPAC) avec au moins un composé choisi parmi les suivants :
(i) un composé de métal de transition des groupes 4 à 10 du tableau périodique (IUPAC) ou
(ii) un composé d'un actinide ou d'un lanthanide pour former un produit réactionnel ;
(b) préparer une émulsion à partir du produit réactionnel de (a) et d'un milieu liquide, dans laquelle émulsion le produit de (a) forme les gouttelettes de la phase dispersée ; et
(c) solidifier les gouttelettes de la phase dispersée pour former les particules solidifiées et éventuellement
(d) récupérer lesdites particules catalytiques solidifiées.

19. Utilisation d'un catalyseur selon l'une quelconque des revendications 1 à 17 dans le procédé de polymérisation d'oléfines, en particulier des α-oléfines en C₂-C₁₀, de préférence le propène ou l'éthène ou leurs copolymères.
